# EUROPEAN PATENT APPLICATION

(11) **EP 2 395 332 A1**
(43) Date of publication of application: **14.12.2011**
(21) Application number: 11169445.1
(22) Date of filing: 10.06.2011
(51) Int. Cl.: G01J 3/457, G01N 21/35

(54) **Spectroscopic analyzer and spectroscopic analysis method**

(30) Priority: 10.06.2010 JP 2010133211
(71) Applicant: Yokogawa Electric Corporation, Tokyo 180-8750 (JP)
(72) Inventor: Watari, Masahiro, Tokyo 180-8750 (JP); Ozaki, Yukihiro, Tokyo (JP)
(74) Representative: Henkel, Breuer & Partner

(57) **Abstract**

A spectroscopic analyzer includes a first measurement section (40) which measures a spectrum of near-infrared region by irradiating a sample with near-infrared light, a second measurement section (30) which measures a spectrum of infrared region by irradiating the sample with infrared light, and an analysis section which analyzes characteristics of the sample using the spectra measured by the first and second measurement sections. The analysis section includes a first calculation module which acquires a integrated spectrum by combining the spectrum of near-infrared region and the spectrum of infrared region, a second calculation module which calculates a difference spectrum of a reference spectrum measured in advance and the integrated spectrum, and a third calculation module which calculates correlation between the spectrum of near-infrared region and the spectrum of infrared region by performing a two-dimensional correlation operation using the difference spectrum.

## Description

### TECHNICAL FIELD

The present disclosure relates to a spectroscopic analyzer and a spectroscopic analysis method using near-infrared light and infrared light.

### RELATED ART

The spectroscopic analyzer is an apparatus which analyzes the characteristics (contained component and the like) of a sample from the spectrum acquired by irradiating the sample with near-infrared light (with a wavelength of 0.7 to 2.5 [µm]) or infrared light (with a wavelength of 2.5 to 25 [µm]). The spectroscopic analyzer using infrared light is characterized in that highly precise analysis can be performed because a sharp spectrum with good separation depending on sample components is acquired, but only a sample which is so thin that infrared light can be transmitted therethrough can be analyzed. In contrast, the spectroscopic analyzer using near-infrared light is characterized in that a thick sample can be analyzed as the transmittance of near-infrared light is higher than that of infrared light, but it is not easy to assign the spectrum peak depending on a sample component as the widths of acquired spectra are large and overlap each other.

Due to the above characteristics, the use of a spectroscopic analyzer differs depending on the required accuracy or application. For example, the spectroscopic analyzer using infrared light is widely used in a lab in which it is necessary to measure components contained in a very small amount of sample with high precision. In contrast, the spectroscopic analyzer using near-infrared light is an instrument, such as a brixmeter which measures the amount of sugar in fruit, and is widely used when measuring and analyzing a sample without breaking it.

When it was necessary to analyze the characteristics of a sample in a wavelength region of near-infrared light to infrared light in the related art, measurement of a spectrum was separately performed using two spectroscopic analyzers of the above spectroscopic analyzer using infrared light and the above spectroscopic analyzer using near-infrared light. Then, the data of the spectrum acquired by each spectroscopic analyzer was downloaded to a computer, and the characteristics of the sample were analyzed by calculating the correlation of the respective spectra using the two-dimensional spectroscopy disclosed in the following Non-patent Documents 1 and 2. The following Patent Document 1 discloses a spectroscopic analyzer capable of analyzing the characteristics of a sample in a wavelength region of near-infrared light to infrared light on its own.

### [Related Art Documents]

### [Patent Document]

[Patent Document 1] JP-A-2009-168711

### [Non-patent Document]

[Non-patent Document 1] Toru Amari et al., "Generalized Two-Dimensional Attenuated Total Reflection/Infrared and Near-Infrared Correlation Spectroscopy Studies of Real-Time Monitoring of the Initial Oligomerization of Bis(hydroxyethyl terephthalate)", Macromolecules, 2002, 35, p.8020-8028
[Non-patent Document 2] 1. Noda et al., "Generalized Two-Dimensional Correlation Spectroscopy", Applied Spectroscopy, Vol. 54, Issue 7, p.236A-248A

Incidentally, since the above-described spectroscopic analyzer disclosed in Patent Document I can treat the spectrum of near-infrared region and the spectrum of infrared region as one spectrum, it is advantageous in that handling becomes easy compared with a case of performing analysis using two spectroscopic analyzers. However, if there is not enough knowledge about both the characteristic of the spectrum of near-infrared region and the characteristic of the spectrum of infrared region, there is a problem in that an analysis result in the wavelength region of near-infrared light to infrared light of the above spectroscopic analyzer disclosed in Patent Document 1 cannot be effectively used.

In addition, basically, the analysis results of spectroscopic analyzers used in a lab and the like are just collected as data indicating the characteristics of a sample. Accordingly, no particular problem occurs even if spectrum measurement is separately performed with the spectroscopic analyzer using infrared light and the spectroscopic analyzer using near-infrared light and the characteristics of a sample is analyzed by a computer after the end of the measurement as described above. However, an analysis result of a spectroscopic analyzer provided at the production site, such as a factory, is fed back and used in order to improve the production efficiency while maintaining the quality of products. For this reason, in the spectroscopic analyzer provided at the production site, the characteristics of products need to be analyzed in approximately real time.

### SUMMARY

Exemplary embodiments of the present invention provide a spectroscopic analyzer and a spectroscopic analysis method capable of analyzing the characteristics of a sample easily and in a short time even if there is not enough knowledge about the spectra of near-infrared region and infrared region.

A spectroscopic analyzer according to an exemplary embodiment of the invention includes:
a first measurement section configured to measure a spectrum of near-infrared region by irradiating a sample with near-infrared light;
a second measurement section configured to measure a spectrum of infrared region by irradiating the sample with infrared light; and
an analysis section configured to analyze characteristics of the sample using the spectra measured by the first and second measurement sections,
wherein the analysis section includes
a first calculation module configured to acquire a integrated spectrum by combining the spectrum of near-infrared region measured by the first measurement section and the spectrum of infrared region measured by the second measurement section,
a second calculation module configured to calculate a difference spectrum of a reference spectrum measured in advance and the integrated spectrum, and
a third calculation module configured to calculate correlation between the spectrum of near-infrared region and the spectrum of infrared region by performing a two-dimensional correlation operation using the difference spectrum calculated by the second calculation module.
   According to the aspect of the invention, the integrated spectrum data is acquired by combining of the spectrum of near-infrared region measured by the first measurement section and the spectrum of infrared region measured by the second measurement section, and then the difference spectrum data of the reference spectrum data measured in advance and the integrated spectrum data is calculated. Using the difference spectrum data, a two-dimensional correlation operation is performed to acquire the correlation (two-dimensional correlation) between the spectrum of near-infrared region and the spectrum of infrared region.
   The second calculation module may be configured to calculate the difference spectrum whenever measurement of a spectrum is performed by the first and second measurement sections.
   The analysis section may further include a prediction module configured to calculate a predicted value of concentration of the sample from the integrated spectrum acquired by the first calculation module using a calibration model showing relationship between concentration and optical absorbance of the sample calculated in advance, and
   the second calculation module may be configured to calculate the difference spectrum when a difference between the predicted value calculated previously by the prediction module and the newly calculated predicted value is equal to or larger than a predetermined threshold value set in advance.
   The second calculation module may be configured to perform an outlier detection for determining whether or not the integrated spectrum acquired by the first calculation module is abnormal using chemometrics and to calculate the difference spectrum based on the integrated spectrum determined to be abnormal.
   The reference spectrum may be a spectrum obtained by averaging the integrated spectra acquired by the first calculation module when the first and second measurement sections have measured spectra a plural number of times by irradiating the sample with near-infrared light and infrared light in advance before analysis of the sample starts.
   A spectroscopic analysis method according to an exemplary embodiment of the invention is a spectroscopic analysis method used in a spectroscopic analyzer including a first measurement section configured to measure a spectrum of near-infrared region by irradiating a sample with near-infrared light and a second measurement section configured to measure a spectrum of infrared region by irradiating the sample with infrared light, the spectroscopic analysis method including;
   acquiring a integrated spectrum by combining the spectrum of near-infrared region measured by the first measurement section and the spectrum of infrared region measured by the second measurement section;
   calculating a difference spectrum of a reference spectrum measured in advance and the integrated spectrum; and
   calculating correlation between the spectrum of near-infrared region and the spectrum of infrared region by performing a two-dimensional correlation operation using the difference spectrum.

According to the invention, the integrated spectrum data is acquired by combining of the spectrum of near-infrared region measured by the first measurement section and the spectrum of infrared region measured by the second measurement section, and then the difference spectrum data of the reference spectrum data measured in advance and the integrated spectrum data is calculated. Using the difference spectrum data, the two-dimensional correlation operation is performed to acquire the correlation (two-dimensional correlation) between the spectrum of near-infrared region and the spectrum of infraredregion. For this reason, even a user who does not have enough knowledge about the spectrum of near-infrared region and the spectrum of infrared region can easily understand the relationship between the spectrum of near-infrared region and the spectrum of infrared region just by referring to the graph showing the two-dimensional correlation between the spectrum of near-infrared region and the spectrum of infrared region.

### BRIEF DESCRIPTION OF THE DRAWINGS

Fig. 1 is a view showing the configuration of a spectrum measuring section provided in a spectroscopic analyzer according to an embodiment of the invention.
Fig. 2 is a block diagram showing the entire configuration of the spectroscopic analyzer.
Fig. 3 is a block diagram showing the main configuration of a PC 70 provided in the spectroscopic analyzer.
Fig. 4 is a flow chart showing the operation of the spectroscopic analyzer.
Fig. 5 is a view for explaining a method of calculating the integrated spectrum data in the spectroscopic analyzer.
Figs. 6A to 6D are views showing an example of the analysis result of the spectroscopic analyzer.

### DETAILED DESCRIPTION

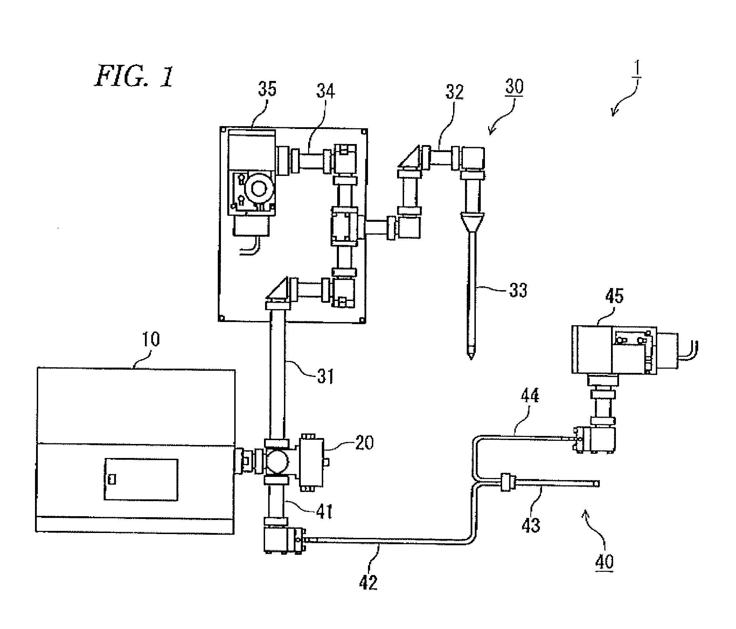

Hereinafter, a spectroscopic analyzer and a spectroscopic analysis method according to an embodiment of the invention will be described in detail with reference to the accompanying drawings. Fig. 1 is a view showing the configuration of a spectrum measuring section provided in the spectroscopic analyzer according to an embodiment of the invention. In addition, although the spectroscopic analyzer of the present embodiment is largely divided into a spectrum measuring section shown in Fig. 1 and an analysis section which performs analysis using the measurement result of the spectrum measuring section, the analysis section is not shown in Fig. 1.

As shown in Fig. 1, the spectrum measuring section provided in the spectroscopic analyzer I of the present embodiment includes an FTIR (Fourier Transform Infrared Spectroscopy) 10, an optical switch 20, an infrared spectrum measuring section 30 (second measurement section), and a near-Infrared spectrum measuring section 40 (first measurement section). In addition, the spectrum measuring section provided in the spectroscopic analyzer 1 of the present embodiment measures the spectrum of near-infrared region and the spectrum of infrared region by irradiating a sample (not shown in Fig. 1), which is an object to be analyzed, with near-infrared light and infrared light.

The FTIR 10 is a broad-band FTIR with a wave number of 12000 to 1200 [cm⁻¹], for example. The FTIR 10 is connected to the optical switch 20 and emits light, which includes a near-infrared light component and an infrared light component, toward the optical switch 20. The optical switch 20 is connected to the infrared spectrum measuring section 30 and the near-infrared spectrum measuring section 40 and switches the destination of light emitted from the FTIR 10 to the infrared spectrum measuring section 30 or the near-infrared spectrum measuring section 40.

The infrared spectrum measuring section 30 includes light pipes 31 and 32, an ATR (Attenuated Total Reflection) probe 33, a light pipe 34, and an infrared detector 35 and measures the spectrum of infrared region by irradiating a sample with light from the FTIR 10. The light pipes 31, 32, and 34 are connected between the optical switch 20 and the ATR probe 33 and are also connected between the ATR probe 33 and the infrared detector 35.

The ATR probe 33 has a distal end immersed in a sample, such as liquid which is an object to be analyzed, and guides light, which is emitted from the FTIR 10 and transmitted sequentially through the optical switch 20 and the light pipes 31 and 32, to the sample and also guides light reflected by the sample to the light pipe 32. The infrared detector 35 performs photoelectric conversion of the light, which has been guided from the ATR probe 33 to the light pipe 32 and transmitted through the light pipe 34, and outputs a signal (interferogram) showing the spectrum of infrared region included in the light.

The near-infrared spectrum measuring section 40 includes a light pipe 41, an optical fiber 42, a near-infrared probe 43, an optical fiber 44, and a near-infrared detector 45 and measures the spectrum of near-infrared region by irradiating a sample with light from the FTIR 10. The light pipe 41 is connected between the optical switch 20 and the optical fiber 42. The optical fiber 42 is connected between the light pipe 41 and the near-infrared probe 43.

Similar to the ATR probe 33, the near-infrared probe 43 has a distal end immersed in a sample and guides light, which is emitted from the FTIR 10 and transmitted sequentially through the optical switch 20, the light pipe 41, and the optical fiber 42, to the sample and also reflects transmitted light of the sample by a mirror in order to guide it to the optical fiber 44. In addition, the ATR probe 33 and the near-infrared probe 43 are immersed in the same sample. The optical fiber 44 is connected between the near-infrared probe 43 and the near-infrared detector 45. The near-infrared detector 45 performs photoelectric conversion of the light, which has been guided from the near-infrared probe 43 to the optical fiber 44, and outputs a signal (interferogram) showing the spectrum of near-infrared region included in the light.

In the configuration described above, when light including a near-infrared light component and an infrared light component is emitted from the FTIR 10, the destination of the light is switched to the infrared spectrum measuring section 30 or the near-infrared spectrum measuring section 40 by the optical switch 20. When the destination of light is switched to the infrared spectrum measuring section 30 side by the optical switch 20, the light emitted from the FTIR 10 is incident on the ATR probe 33 after being transmitted through the light pipes 31 and 32 sequentially and is reflected by the sample. This reflected light is incident on the infrared detector 35 for photoelectric conversion after being transmitted through the light pipes 32 and 34 sequentially, and a signal showing the spectrum of infrared region included in the reflected light is output from the infrared detector 35.

In contrast, when the destination of light is switched to the near-infrared spectrum measuring section 40 side by the optical switch 20, the light emitted from the FTIR 10 is incident on the near-infrared probe 43 after being transmitted through the light pipe 41 and the optical fiber 42 sequentially and is transmitted through the sample. The transmitted light of this sample is reflected by the mirror provided in the near-infrared probe 43. This reflected light is guided to the optical fiber 44 and is then incident on the near-infrared detector 45 for photoelectric conversion, and a signal showing the spectrum of near-infrared region included in the reflected light is output from the near-infrared detector 45. In this way, the spectra of near-infrared region and infrared region are measured.

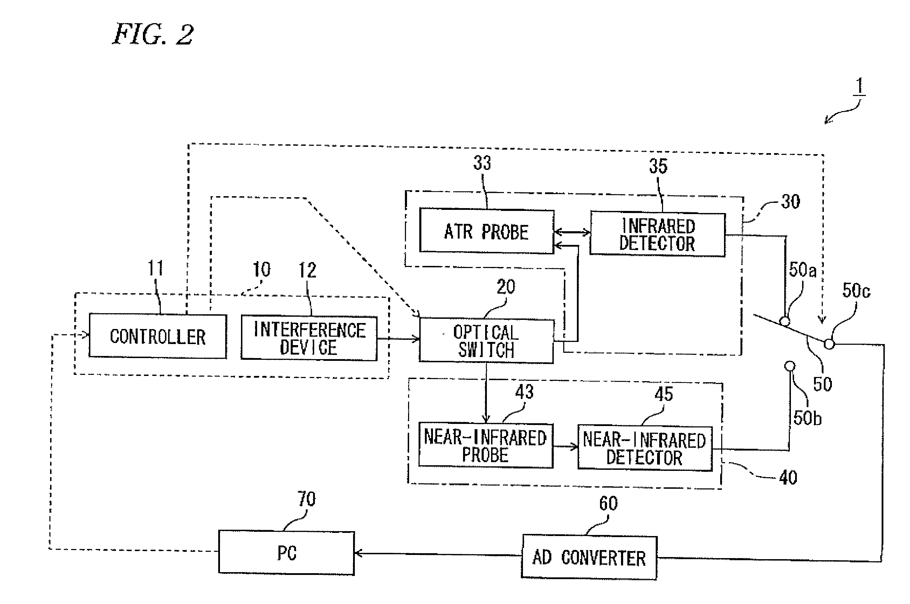

Next, the entire configuration of the spectroscopic analyzer 1 including the spectrum measuring section described above and the analysis section, which is not shown in Fig. 1, will be described with reference to Fig. 2. Fig. 2 is a block diagram showing the entire configuration of the spectroscopic analyzer according to an embodiment of the invention. As shown in Fig. 2, the spectroscopic analyzer I includes the FTIR 10, the optical switch 20, the infrared spectrum measuring section 30, the near-infrared spectrum measuring section 40, a switch 50, an AD (Analog to Digital) converter 60, and a PC (Personal Computer: analysis section) 70.

The FTIR 10 includes a controller 11 and an interference device 12. The controller 11 controls each section in the FTIR 10 on the basis of a control signal output from the PC 70 and also controls switching of the optical switch 20 and the switch 50. The interference device 12 is an interferometer (for example, Michelson interferometer) including an optical system of a light source, a half mirror, and the like and emits light for spectrum measurement. The light source provided in the interference device 12 is a tungsten lamp, a ceramic rod, or a halogen lamp, for example, and emits light including both near-infrared light and infrared light. In addition, the half mirror provided in the interference device 12 is formed of CaF₂ (calcium fluoride), for example. In the interference device 12, the light emitted from the light source and interfered by the optical system is pure light of which Fourier transform is possible.

The infrared spectrum measuring section 30 includes the ATR probe 33, the infrared detector 35, and the like described above and measures the spectrum of infrared region by irradiating a sample with light which is emitted from the FTIR 10 and transmitted through the optical switch 20. The near-infrared spectrum measuring section 40 includes the near-infrared probe 43, the near-infrared detector 45, and the like described above and measures the spectrum of near-infrared region by irradiating a sample with light which is emitted from the FTIR 10 and transmitted through the optical switch 20. That is, the spectroscopic analyzer I of the present embodiment can measure the spectrum of infrared region with the infrared spectrum measuring section 30 and can measure the spectrum of near-infrared region with the near-infrared spectrum measuring section 40 just by performing switching of the optical switch 20 without changing the light source of the interference device 12.

The switch 50 includes an input terminal 50a connected to the infrared detector 35, an input terminal 50b connected to the near-infrared detector 45, and an output terminal 50c connected to the AD converter 60 and performs switching between the input terminals 50a and 50b connected to the output terminal 50c under control of the controller 11. When the input terminal 50a is connected to the output terminal 50c, the infrared detector 35 is connected to the AD converter 60. When the input terminal 50b is connected to the output terminal 50c, the near-infrared detector 45 is connected to the AD converter 60. The AD converter 60 converts the analog signal, which is output from the infrared detector 35 or the near-infrared detector 45 through the switch 50, into a digital signal and outputs it to the PC 70. The PC 70 analyzes the characteristics of the sample by performing various kinds of operations, which will be described below, on the digital signal output from the AD converter 60.

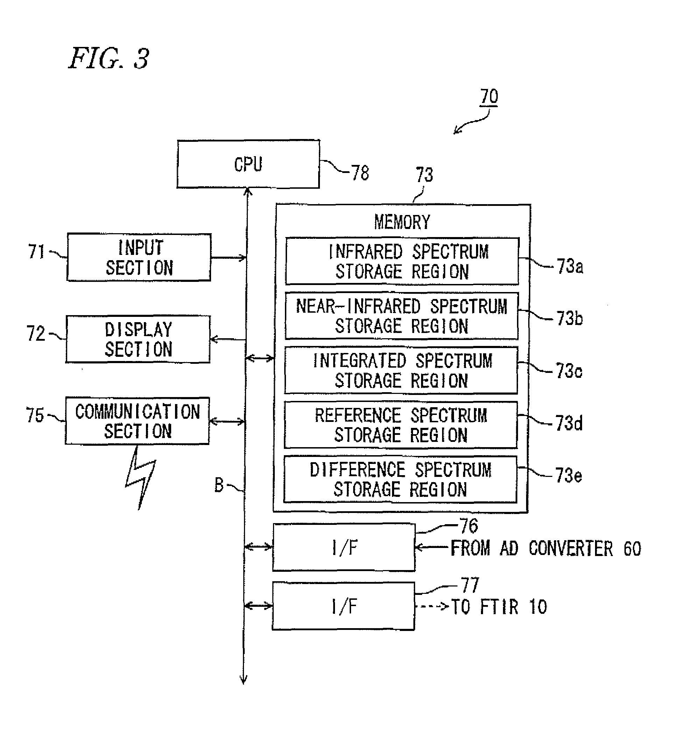

Fig. 3 is a block diagram showing the main configuration of the PC 70 provided in the spectroscopic analyzer according to the embodiment of the invention. As shown in Fig. 3, the PC 70 includes an input section 71, a display section 72, a memory 73, a communication section 75, I/Fs (interfaces) 76 and 77, and a CPU (Central Processing Unit) 78. In addition, the above-described blocks provided in the PC 70 are connected to each other through a bus B.

The input section 71 has a pointing device, such as a keyboard or a mouse, and receives a key operation input and a position operation input from a user and outputs the operation input signal to the CPU 78. The display section 72 includes a display device, such as a CRT (Cathode Ray Tube) or a liquid crystal display, and displays an image corresponding to the image signal output from the CPU 78 (for example, an image showing the analysis result of a sample).

The memory 73 is a memory represented by an HDD, and stores various kinds of data and programs. Specifically, a system program such as an OS (Operating System), a spectrum measuring program which will be described later, a reference spectrum calculation program, and an application program such as an analysis program are stored in the memory 73. An infrared spectrum storage region 73a, a near-infrared spectrum storage region 73b, a integrated spectrum storage region 73c, a reference spectrum storage region 73d, and a difference spectrum storage region 73e are set in the memory 73.

The infrared spectrum storage region 73a is a region where the spectrum data of infrared region output from the AD converter 60 is stored, and the near-infrared spectrum storage region 73b is a region where the spectrum data of near-infrared region output from the AD converter 60 is stored. In addition, the spectrum data of infrared region and near-infrared region is stored in the infrared spectrum storage region 73a or the near-infrared spectrum storage region 73b so as to match the spectrum data measurement time of the infrared spectrum measuring section 30 or the near-infrared spectrum measuring section 40.

The integrated spectrum storage region 73c is a region where the integrated spectrum data obtained by combining the spectrum data of infrared region and the spectrum data of near-infrared region is stored. The reference spectrum storage region 73d is a region where the reference spectrum data is stored. Here, the reference spectrum data is average data of a plurality of integrated spectrum data items obtained by irradiating a sample with infrared light and near-infrared light in advance before starting the analysis of the sample so that the infrared spectrum measuring section 30 and the near-infrared spectrum measuring section 40 measure the spectrum a plural number of times (for example, about 5 times).

The difference spectrum storage region 73e is a region where the difference spectrum data, which shows a difference between the integrated spectrum data acquired after analysis of a sample is started and the reference spectrum data stored in the reference spectrum storage region 73d, is stored. In addition, combining of the spectrum data of infrared region and the spectrum data of near-infrared region described above, calculation of the reference spectrum data described above, and calculation of the difference spectrum data are performed by the CPU 78, and detailed explanations thereof will be described later.

The communication section 75 is connected to a communication network, such as a LAN (Local Area Network), and transmits or receives various kinds of information to or from an external device on the communication network. The 1/F 76 is an interface connected to the AD converter 60. The spectrum data of infrared region or near-infrared region input from the AD converter 60 is input to the CPU 78 through the I/F 76. The I/F 77 is an interface connected to the FTIR 10. A control signal for control of the FTIR 10 and the like, which is output from the CPU 78, is output to the controller 11 of the FTIR 10 through the I/F 77.

The CPU 78 performs overall control of each section of the PC 70 described above. In addition, the CPU 78 executes various kinds of processing, such as processing of analyzing the characteristics of a sample, by reading a designated program among system programs and application programs stored in the memory 73 and loading it to the memory 73 to execute it. Specifically, the CPU 78 performs processing of obtaining the integrated spectrum data by combining the spectrum data of infrared region and the spectrum data of near-infrared region described above, processing of calculating the difference spectrum data described above, and processing of calculating the correlation between the spectrum of infrared region and the spectrum of near-infrared region by performing a two-dimensional correlation operation using the difference spectrum data. In addition, the CPU 78 performs processing of calculating the reference spectrum data described above.

In addition to the above processing, the CPU 78 performs spectrum analysis processing and calibration model creation processing on the basis of the integrated spectrum data. Here, the spectrum analysis processing indicates chemometrics using a statistical analysis method, for example. Using the integrated spectrum data obtained by combining the infrared spectrum data and the near-infrared spectrum data, the CPU 78 performs analysis for creating the calibration model which predicts the concentration of a sample from the spectrum by statistical analysis processing. Here, the calibration model represents the relational expression showing the relationship between the concentration of a sample and the optical absorbance of the sample. Using this calibration model, the concentration of a sample with unknown concentration can be predicted. In addition, the CPU 78 also controls the FTIR 10, the optical switch 20, and the switch 50.

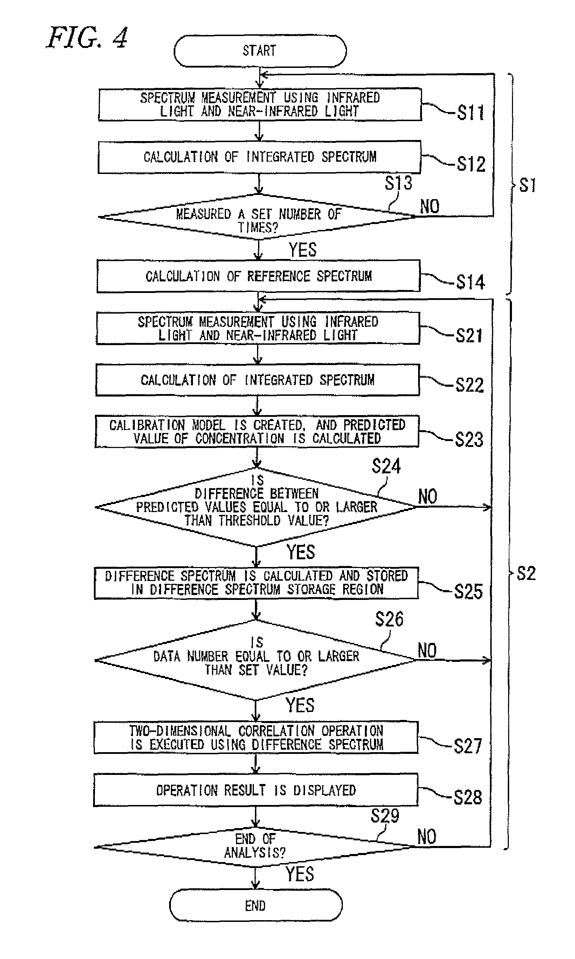

Next, the operation of the spectroscopic analyzer 1 with the above-described configuration will be described. Fig. 4 is a flow chart showing the operation of the spectroscopic analyzer according to an embodiment of the invention. As shown in Fig. 4, the operation of the spectroscopic analyzer 1 is largely divided into an initial measurement process S1 of calculating the reference spectrum and a measurement analysis process S2 of actually analyzing the characteristics of a sample. Hereinafter, details of processing performed in each of these processes will be described in order.

When power is supplied, the system program and the application program stored in the memory 73 provided in the PC 70 are read by the CPU 78 and loaded into the memory 73 appropriately. When a reference spectrum calculation instruction from a user is input through the input section 71 of the PC 70 after the above preparation ends, the reference spectrum measuring program loaded into the memory 73 is executed to start the initial measurement process S1.

When the initial measurement process S1 starts, spectrum measurement using infrared light and near-infrared light is first performed (process S11). Specifically, the CPU 78 of the PC 70 generates a control signal of the optical switch 20 and the switch 50 and transmits it to the controller 11 of the FTIR 10 through the I/F 77. After this control signal is received by the controller 11, switching of the optical switch 20 is performed and measurement of the spectrum of infrared region in the infrared spectrum measuring section 30 and measurement of the spectrum of near-infrared region in the near-infrared spectrum measuring section 40 are sequentially performed. Here, since switching of the switch 50 is also performed in synchronization with the switching of the optical switch 20, an interferogram of the infrared spectrum and an interferogram of the near-infrared spectrum are output in order through the switch 50.

The interferogram of the infrared spectrum and the interferogram of the near-infrared spectrum, which have been output from the switch 50, are converted into digital signals by the AD converter 60 and are then input to the PC 70. Then, the Fourier transform thereof is performed by FFT (Fast Fourier Transform) in order to obtain the spectrum. In addition, the spectrum data of infrared region and the spectrum data of near-infrared region are stored in the infrared spectrum storage region 73a and the near-infrared spectrum storage region 73b, respectively, together with the respective measurement time.

After the above spectrum measurement ends, the infrared spectrum data stored in the infrared spectrum storage region 73a of the memory 73 and the near-infrared spectrum data stored in the near-infrared spectrum storage region 73b are read by the CPU 78 to be combined (step S12). The integrated spectrum data acquired by this processing is stored in the integrated spectrum storage region 73c of the memory 73.

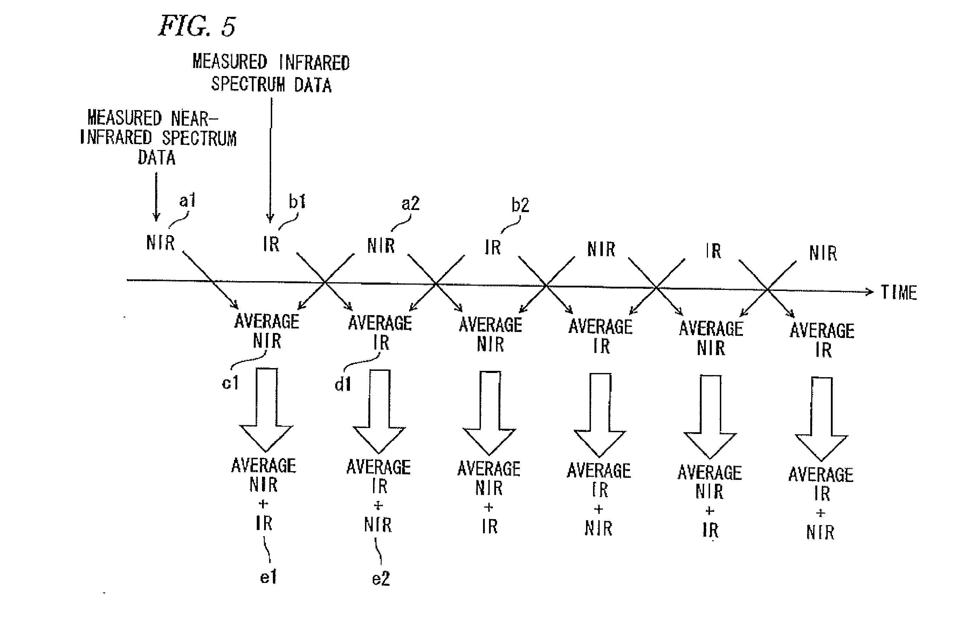

Here, processing of calculating the integrated spectrum data will be specifically described with reference to Fig. 5. Although the integrated spectrum data may be calculated by simply adding the infrared spectrum data and the near-infrared spectrum data, it is desirable to calculate the integrated spectrum data using the method shown in Fig. 5. Fig. 5 is a view for explaining a method of calculating the integrated spectrum data in the spectroscopic analyzer according to an embodiment of the invention.

The characters "NIR" in Fig. 5 indicate the near-infrared spectrum data acquired by measurement of the near-infrared spectrum measuring section 40, and the characters "IR" indicate the infrared spectrum data acquired by measurement of the infrared spectrum measuring section 30. In addition, here, an example where the near-infrared spectrum data is first measured will be described. In addition, the near-infrared spectrum data and the infrared spectrum data are spectrum distribution data of the light absorbance relating to the wave number.

The near-infrared spectrum data and the infrared spectrum data are stored in the near-infrared spectrum storage region 73b and the infrared spectrum storage region 73a of the memory 73, respectively, in a state that these data are matched to the corresponding measurement time. The CPU 78 combines the spectrum data of near-infrared region and infrared region stored in the memory 73 while interpolating it. In addition, although an example where interpolation is performed using two continuous sets of spectrum data of near-infrared region and infrared region is described herein, the interpolation method is not limited to this example.

Now, as shown in Fig. 5, near-infrared spectrum data al, infrared spectrum data b1, near-infrared spectrum data a2, infrared spectrum data b2, ... are stored in the memory 73 in order from the oldest measurement time. First, the CPU 78 reads the near-infrared spectrum data a1 acquired immediately before the infrared spectrum data b1 and the near-infrared spectrum data a2 acquired immediately after the infrared spectrum data b1 and calculates the average near-infrared spectrum data c1 indicating their average value. In addition, the characters "average NIR" in Fig. 5 indicate the average near-infrared spectrum data. Then, the CPU 78 generates the integrated spectrum data e1 by reading the infrared spectrum data b1 and adding the average near-infrared spectrum data cl. The integrated spectrum data e1 is data for interpolating the near-infrared spectrum data at the time when the infrared spectrum data b1 is measured.

Then, the CPU 78 reads the infrared spectrum data b1 acquired immediately before the near-infrared spectrum data a2 and the infrared spectrum data b2 acquired immediately after the near-infrared spectrum data a2 and calculates the average Infrared spectrum data d1 indicating their average value. In addition, the characters "average IR" in Fig. 5 indicate the average infrared spectrum data. Then, the CPU 78 generates the integrated spectrum data e2 by reading the near-infrared spectrum data a2 and adding the average infrared spectrum data d1. The integrated spectrum data e2 is data for interpolating the infrared spectrum data at the time when the near-infrared spectrum data a2 is measured. Then, by repeating the same processing, the integrated spectrum data obtained by combining the spectrum data of infrared region and the spectrum data of near-infrared region is calculated. The integrated spectrum acquired in this way is stored in the integrated spectrum storage region 73c of the memory 73.

After the above processing ends, the CPU 78 determines whether or not the spectrum measurement using infrared light and near-infrared light has been performed a set number of times (for example, 5 times) set in advance (step S13). When it is determined that the spectrum measurement has not been performed a set number of times (when the determination result is "NO"), the spectrum measurement using infrared light and near-infrared light is performed again (step S11). In contrast, when it is determined that the spectrum measurement has been performed a set number of times (when the determination result is "YES"), the CPU 78 calculates the reference spectrum data (step S14). Specifically, by reading a plurality of integrated spectra stored in the integrated spectrum storage region 73c of the memory 73 and averaging them, the reference spectrum data is calculated. The acquired reference spectrum data is stored in the reference spectrum storage region 73d of the memory 73. Thus, the initial measurement step S1 ends.

When a measurement analysis instruction from a user is input through the input section 71 of the PC 70 after the initial measurement step S1 ends, the spectrum measuring program and the analysis program loaded into the memory 73 are executed to start a measurement analysis step S2. When the measurement analysis step S2 starts, spectrum measurement using infrared light and near-infrared light is first performed (step S21). Specifically, similar to step S11 of the initial measurement step S1, a control signal generated in the CPU 78 of the PC 70 is transmitted to the controller 11 and the optical switch 20 and the switch 50 are switched in synchronization with each other. Then, measurement of the spectrum of infrared region in the infrared spectrum measuring section 30 and measurement of the spectrum of near-infrared region in the near-infrared spectrum measuring section 40 are sequentially performed, and an interferogram of the infrared spectrum and an interferogram of the near-infrared spectrum are sequentially output through the switch 50.

The interferogram of the infrared spectrum and the interferogram of the near-infrared spectrum, which have been output from the switch 50, are converted into digital signals by the AD converter 60 and then the Fourier transform of the signals is performed by the PC 70. In addition, the spectrum data of infrared region and the spectrum data of near-infrared region are stored in the infrared spectrum storage region 73a and the near-infrared spectrum storage region 73b of the memory 73, respectively, together with the respective measurement time.

After the above spectrum measurement ends, the infrared spectrum data stored in the infrared spectrum storage region 73a of the memory 73 and the near-infrared spectrum data stored in the near-infrared spectrum storage region 73b are read by the CPU 78 and combined by the same method as the method described using Fig. 5. As a result, the integrated spectrum is acquired (step S22: first calculation module, first step). The integrated spectrum data acquired by this processing is stored in the integrated spectrum storage region 73c of the memory 73.

Then, the integrated spectrum data stored in the integrated spectrum storage region 73c is read by the CPU 78, and the predicted value of the concentration of a sample is calculated using the calibration model created in advance using chemometrics (step S23: prediction module). In addition, since a known method can be used as the method of calculating the predicted value of the concentration using the calibration model, a detailed explanation thereof will be omitted herein. The predicted value of the concentration calculated by the CPU 78 is stored in the memory 73. In addition, the predicted value and the integrated spectrum data may be output to an external device through the communication section 75.

Then, the predicted value calculated in the last measurement and the predicted value calculated in this measurement are read from the memory 73 into the CPU 78, and the CPU 78 determines whether or not the difference between these predicted values is equal to or larger than a threshold value set in advance (step S24). Here, since the spectrum measurement of step S21 is performed only once, the predicted value calculated in the last measurement is not present. Accordingly, the processing of step S24 is omitted, and processing (adding processing) of calculating the difference spectrum data and storing it in the difference spectrum storage region 73d of the memory 73 is performed by the CPU 78 (step S25: second calculation module, second step).

Specifically, by reading the integrated spectrum data stored in the integrated spectrum storage region 73c of the memory 73 and the reference spectrum data stored in the reference spectrum storage region 73d and calculating the difference therebetween by the CPU 78, the difference spectrum data is acquired. The difference spectrum data calculated by the CPU 78 is stored in the difference spectrum storage region 73e of the memory 73.

After the difference spectrum data is calculated, the CPU 78 determines whether or not the data number (number of times of spectrum measurement using infrared light and near-infrared light) of the spectrum is equal to or larger than a set value (for example, "3") set in advance (step S26). Here, since the spectrum measurement of step S21 is performed only once, the determination result in step S26 is "NO". Accordingly, spectrum measurement is performed again (step S21), the integrated spectrum data is calculated (step S22), and the predicted value of the concentration of a sample is calculated using the calibration model (step S23). In addition, the spectrum data, the integrated spectrum data, and the predicted value of concentration acquired by the above processing are stored in the memory 73.

After the above processing ends, the predicted value calculated in the last measurement and the predicted value calculated in this measurement are read from the memory 73 into the CPU 78, and the CPU 78 determines whether or not the difference between these predicted values is equal to or larger than a threshold value set in advance (step S24). When the difference between the predicted values is smaller than the threshold value (when the determination result is "NO"), the process returns to step S21 to perform spectrum measurement. In contrast, when the difference between the predicted values is equal to or larger than the threshold value (when the determination result is "YES"), the CPU 78 performs processing of calculating the difference spectrum data and adding it in the difference spectrum storage region 73d of the memory 73 (step S25).

Thus, in the present embodiment, only when the difference between predicted values of concentration is equal to or larger than a threshold value (only when the determination result in step S24 is "YES"), the difference spectrum data is calculated and added in the difference spectrum storage region 73d of the memory 73. This is for improving the accuracy of correlation (correlation between the spectrum of infrared region and the spectrum of near-infrared region) calculated by the two-dimensional correlation operation performed in step S27, which will be described later, while reducing the time required for the operation as much as possible by suppressing the data number of difference spectrum data. That is, the accuracy of the correlation calculated by the two-dimensional correlation operation is improved by increasing the data number of difference spectrum data when a predicted concentration change is large, and the time required for the two-dimensional correlation operation is reduced as much as possible by not increasing the data number of difference spectrum data when the predicted concentration change is small. In addition, although the threshold value of the predicted value from the measured spectrum is used as a reference herein, there are a number of determination methods in chemometrics. For example, it is possible to use outlier detection for determining whether or not the measured spectrum is abnormal from the shape prediction value of a spectrum and the like.

Now, it is assumed that the data number (number of times of spectrum measurement using infrared light and near-infrared light) of a spectrum is equal to or larger than the set value set in advance. Then, the determination result in step S26 is "YES". Accordingly, the difference spectrum data stored in the difference spectrum storage region 73e of the memory 73 is read by the CPU 78, and the two-dimensional correlation operation disclosed in Non-patent Documents 1 and 2 described above is performed to calculate the spectrum of near-infrared region and the spectrum of infrared region based on the difference spectrum data (step S27: third calculation module, third step).

Here, the correlation between the spectrum of near-infrared region and the spectrum of infrared region can be calculated even if the integrated spectrum data calculated in step S22 is used. In the present embodiment, the correlation between the spectrum of near-infrared region and the spectrum of infrared region is calculated using the difference spectrum data indicating the difference between the integrated spectrum data and the reference spectrum data in order to catch subtle changes in the characteristics (for example, concentration) of a sample with high sensitivity.

After the two-dimensional correlation operation ends, the CPU 78 creates a graph showing the correlation between the spectrum of near-infrared region and the spectrum of infrared region, which is an operation result of the two-dimensional correlation operation, and displays it on the display section 72 (step S28). After the above processing ends, the CPU 78 determines whether or not an analysis end instruction from the user has been input through the input section 71 of the PC 70 (step S29). When the analysis end instruction has not yet been input (when the determination result in step S29 is "NO"), the process returns to step S21 to perform spectrum measurement again. In contrast, when the analysis end instruction has been input (when the determination result in step S29 is "YES"), the series of processings shown in Fig. 4 ends.

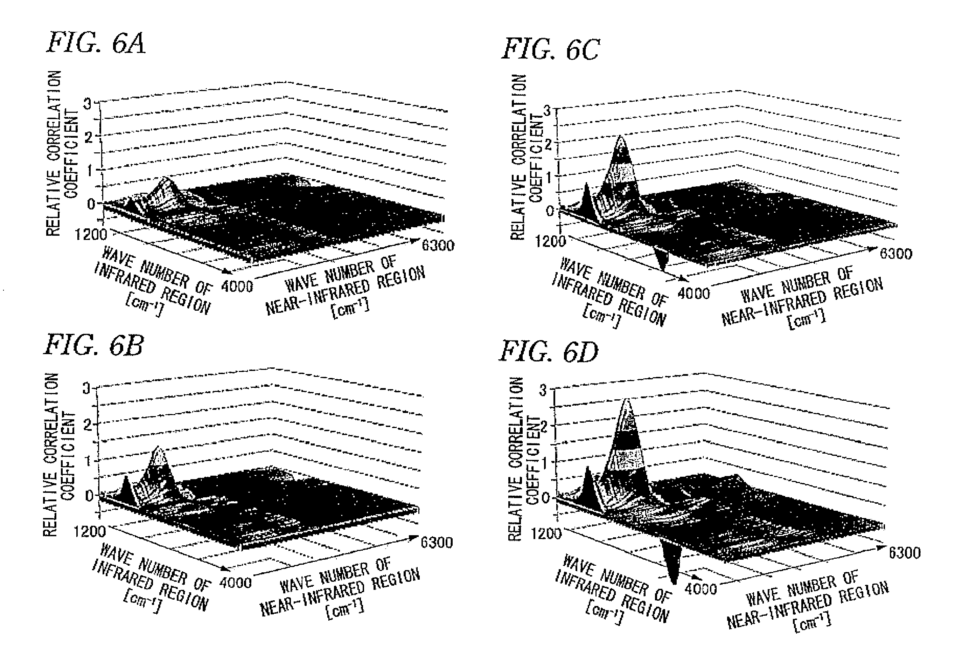

Figs. 6A to 6D are views showing an example of the analysis result of the spectroscopic analyzer according to the embodiment of the invention. Figs. 6A to 6D are graphs showing the two-dimensional correlation acquired when a boric acid solution whose concentration changes is used as a sample. Fig. 6A is a graph when the concentration of boric acid is 1 wt%, Fig. 6B is a graph when the concentration of boric acid is 2 wt%, Fig. 6C is a graph when the concentration of boric acid is 4 wt%, and Fig. 6D is a graph when the concentration of a boric acid is 5 wt%.

Referring to Figs. 6A to 6D, it can be seen that there is correlation between a portion whose wave number of the infrared region is near 1400 [cm⁻¹] and a portion whose wave number of the near-infrared region is near 4500 [cm⁻¹] and the correlation becomes strong gradually as the concentration of the boric acid increases. Here, the chemical formula for the boric acid is expressed as H₃BO₃, and the peak of absorption by single bond (B-O) between a boron atom and an oxygen atom appears at the wave number of the infrared region near 1400 [cm⁻¹]. Referring to Figs. 6A to 6D, the portion whose wave number of the near-infrared region is near 4500 [cm⁻¹] is correlated with the portion whose wave number of the infrared region is near 1400 [cm⁻¹]. Accordingly, it can be predicted that the peak of absorption appearing at the wave number of the near-infrared region near 4500 [cm⁻¹] is based on the bond (B-OH) between a boron atom and a hydroxyl group.

As described above, in the present embodiment, the integrated spectrum data is acquired by combining the spectrum of infrared region measured by the infrared spectrum measuring section 30 and the spectrum of near-infrared region measured by the near-infrared spectrum measuring section 40, and then the difference spectrum data of the reference spectrum data measured in advance and the integrated spectrum data is calculated. Then, by performing the two-dimensional correlation operation using the difference spectrum data, correlation (two-dimensional correlation) between the spectrum of near-infrared region and the spectrum of infrared region is calculated. For this reason, even a user who does not have enough knowledge about the spectrum of near-infrared region and the spectrum of infrared region can easily analyze the near-infrared/infrared spectrum of a sample just by referring to the graph showing the two-dimensional correlation between the spectrum of near-infrared region and the spectrum of infrared region.

Moreover, in the spectroscopic analyzer 1 of the present embodiment, the characteristics of a sample can be analyzed in a short time since the two-dimensional correlation operation is executed while spectrum measurement is being performed. Accordingly, when the spectroscopic analyzer 1 is installed at the production site, such as a factory, an analysis result can be fed back quickly and accurately. As a result, production efficiency can be improved while maintaining the quality of products.

As described above, although the spectroscopic analyzer and the spectroscopic analysis method according to the embodiment of the invention have been described, the invention is not necessarily limited to the above embodiment and may be freely changed within the scope of the invention. For example, although the example of calculating two-dimensional correlation (two-dimensional simultaneous correlation) of the spectrum data calculated simultaneously has been described in the above embodiment, the invention may also be applied to a case of calculating two-dimensional correlation (two-dimensional different-time correlation) of the spectra calculated at a different time. Moreover, as a two-dimensional correlation method, it is also possible to use perturbation-correlation two-dimensional correlation spectroscopy and the like.

In addition, in the above embodiment, an example has been described in which the ATR probe 33 and the near-infrared probe 43 are immersed in the same sample and the spectrum of infrared region and the spectrum of near-infrared region are measured. However, a process of measuring the spectrum of infrared region and a process of measuring the spectrum of near-infrared region may be set to be different. For example, the spectrum of infrared region may be measured in a previous process of a drying process of drying products, and the spectrum of near-infrared region may be measured in a subsequent process of the drying process.

Moreover, in the above embodiment, an example has been described in which the difference spectrum data is acquired by calculating the difference between the integrated spectrum data and the reference spectrum data. However, similar effects can be expected even if the difference spectrum data obtained by differentiating the integrated spectrum data is used instead of using the difference spectrum data. In addition, it is thought that even if the difference spectrum data is used, the effect is large if a difference of differential spectra and a reference spectra (for example, which is average data of a plurality of differential spectrum calculated before starting the analysis of the sample) is used.

Further, in the above embodiment, the light pipe is used as the second measurement section configured to measure a spectrum of infrared region by irradiating the sample with infrared light. However, an infrared light fiber (chalcogenide fiber, sliver halide fiber, a hollow fiber, and the like) may be used as the second measurement section.

While certain embodiments have been described, these embodiments have been presented by way of example only, and are not intended to limit the scope of the invention. Indeed, the novel apparatus and method described herein may be embodied in a variety of other forms; furthermore, various omissions, substitutions and changes in the form of the apparatus and method, described herein may be made without departing from the sprit of the invention. The accompanying claims and their equivalents are intended to cover such forms or modifications as would fall within the scope and sprit of the invention.

## Claims

1. A spectroscopic analyzer comprising:
a first measurement section configured to measure a spectrum of near-infrared region by irradiating a sample with near-infrared light;
a second measurement section configured to measure a spectrum of infrared region by irradiating the sample with infrared light; and
an analysis section configured to analyze characteristics of the sample using the spectra measured by the first and second measurement sections,
wherein the analysis section includes
a first calculation module configured to acquire a integrated spectrum by combining the spectrum of near-infrared region measured by the first measurement section and the spectrum of infrared region measured by the second measurement section,
a second calculation module configured to calculate a difference spectrum of a reference spectrum measured in advance and the integrated spectrum, and
a third calculation module configured to calculate correlation between the spectrum of near-infrared region and the spectrum of infrared region by performing a two-dimensional correlation operation using the difference spectrum calculated by the second calculation module.

2. The spectroscopic analyzer according to claim 1,
wherein the second calculation module is configured to calculate the difference spectrum whenever measurement of a spectrum is performed by the first and second measurement sections.

3. The spectroscopic analyzer according to claim 1,
wherein the analysis section further includes a prediction module configured to calculate a predicted value of concentration of the sample from the integrated spectrum acquired by the first calculation module using a calibration model showing relationship between concentration and optical absorbance of the sample calculated in advance, and
wherein the second calculation module is configured to calculate the difference spectrum when a difference between the predicted value calculated previously by the prediction module and the newly calculated predicted value is equal to or larger than a predetermined threshold value set in advance.

4. The spectroscopic analyzer according to claim 1,
wherein the second calculation module is configured to perform an outlier detection for determining whether or not the integrated spectrum acquired by the first calculation module is abnormal using chemometrics and to calculate the difference spectrum based on the integrated spectrum determined to be abnormal.

5. The spectroscopic analyzer according to any one of claims 1 to 4,
wherein the reference spectrum is a spectrum obtained by averaging the integrated spectra acquired by the first calculation module when the first and second measurement sections have measured spectra a plural number of times by irradiating the sample with near-infrared light and infrared light in advance before analysis of the sample starts.

6. A spectroscopic analysis method used in a spectroscopic analyzer including a first measurement section configured to measure a spectrum of near-infrared region by irradiating a sample with near-infrared light and a second measurement section configured to measure a spectrum of infrared region by irradiating the sample with infrared light, the spectroscopic analysis method comprising:
acquiring a integrated spectrum by combining the spectrum of near-infrared region measured by the first measurement section and the spectrum of infrared region measured by the second measurement section;
calculating a difference spectrum of a reference spectrum measured in advance and the integrated spectrum; and
calculating correlation between the spectrum of near-infrared region and the spectrum of infrared region by performing a two-dimensional correlation operation using the difference spectrum.
